# EUROPÄISCHE PATENTSCHRIFT

(11) **EP 2 446 173 B1**
(45) Veröffentlichungstag und Bekanntmachung des Hinweises auf die Patenterteilung: **07.08.2013**
(21) Anmeldenummer: 10720631.0
(22) Anmeldetag: 01.06.2010
(51) Int. Cl.: F16H 57/08, F16H 57/02

(54) **GESCHWEISSTES BAUTEIL, INSBESONDERE PLANETENRADTRÄGER, VERFAHREN ZUR HERSTELLUNG DES BAUTEILS UND VORRICHTUNG ZUR DURCHFÜHRUNG DES VERFAHRENS**
WELDED STRUCTURE, IN PARTICULAR PLANET CARRIER, METHOD FOR PRODUCING SAID STRUCTURE AND DEVICE FOR CARRYING OUT THE METHOD
STRUCTURE SOUDEE, NOTAMMENT PORTE-SATELLITES, PROCÉDÉ DE FABRICATION CETTE STRUCTURE ET DISPOSITIF D'EXECUTER DU PROCÉDÉ

(30) Priorität: 22.06.2009 DE 102009027066
(43) Veröffentlichungstag der Anmeldung: 02.05.2012
(73) Patentinhaber: ZF Friedrichshafen AG, 88038 Friedrichshafen (DE)
(72) Erfinder: BROCKSTIEGER, Joerg, 66271 Kleinbittersdorf (DE); NONNWEILER, Werner, 66125 Saarbrücken (DE); MORLO, Ralf, 66126 Saarbrücken (DE)
(86) Internationale Anmeldenummer: PCT/EP2010/057597
(87) Internationale Veröffentlichungsnummer: WO 2010/149472

(56) Entgegenhaltungen:
- DE-A1- 3 542 622
- FR-A1- 2 299 566
- JP-A- 10 288 248

## Beschreibung

Die Erfindung betrifft ein geschweißtes Bauteil nach dem Oberbegriff des Patentanspruches 1, ein Verfahren zur Herstellung des Bauteiles nach dem Oberbegriff des Patentanspruches 9 sowie eine Vorrichtung zur Durchführung des Verfahrens nach dem Oberbegriff des Patentanspruches 12 und schließlich ein Verfahren zur Herstellung nach dem Oberbegriff des Patentanspruches 15.

Es ist bekannt, unterschiedlich ausgebildete Blechteile, jedoch mit gleicher Blechdicke durch Schweißen zu fügen. Bei einem topfförmig ausgebildeten ersten Blechteil und einem scheibenförmig ausgebildeten zweiten Blechteil ergeben sich verschiedene Möglichkeiten der Schweißverbindung, beispielsweise eine Radialschweißnaht, welche sich in radialer Richtung erstreckt, oder eine Axialschweißnaht, welche sich in axialer Richtung erstreckt. Bekannte Schweißverfahren für derartige Verbindungen sind das Laserstrahlschweißen, das Elektronenstrahlschweißen oder das Kondensator-Entladungsschweißen. In jedem Falle bestimmen die Länge und die Tiefe der Schweißnaht die Größe der übertragbaren Kräfte. Dabei ist die Tiefe der Schweißnaht abhängig von der Blechdicke, d. h. die Schweißnaht kann nicht länger sein als die Blechdicke.

Geschweißte Bauteile dieser Art sind beispielsweise Planetenradträger, kurz Planetenträger genannt, wie sie in Umlauf- oder Planetengetrieben Verwendung finden. Dabei wird ein erstes, als Steg ausgebildetes, Blechteil mit einem zweiten als Führungsscheibe ausgebildeten Blechteil gefügt.

Durch die DE 35 42 622 A1 wurde ein geschweißter Planetenträger für ein Kraftfahrzeuggetriebe bekannt, wobei der Steg und die Führungsscheibe durch Kondensator-Entladungsschweißung miteinander verbunden werden. Die Schweißnaht ist hier als Kehlnaht ausgebildet.

Durch die DE 103 61 701 B4 wurde ein Planetenradträger für ein Automatikgetriebe bekannt, wobei die Teile des Planetenträgers durch Hartlöten miteinander verbunden werden.

Durch die DE 26 05 227 A der Anmelderin wurde ein Planetenradträger bekannt, bei welchem die beiden Teile des Planetenträgers, zwei Seitenscheiben mit Stegansätzen, durch eine in der Mitte, bezogen auf eine axiale Richtung, angeordnete, umlaufende Schweißnaht miteinander verbunden sind. Durch die Verlegung der Schweißnaht zur Mitte der Stege kommen die Schweißstellen in einen Bereich geringerer Spannungen, d. h. die Scheißverbindung ist höher belastbar.

Durch die DE 199 12 719 A1 wurde ein Planetenträger, bestehend aus zwei Trägerscheiben mit Stegabschnitten, bekannt, wobei beide Trägerscheiben im axial mittleren Bereich der Stege durch eine Schweißnaht miteinander verbunden sind, d. h. in einem Bereich geringerer Belastung. Die Schweißnaht ist als Radialschweißnaht ausgebildet und entspricht in ihrer radialen Erstreckung der Wandstärke der aneinander stoßenden Stegabschnitte.

Aus der gattungsgemäßen JP 10-288248 A ist ein geschweißtes Bauteil bekannt, welches zwei durch mindestens eine Schweißnaht verbundene Blechteile umfasst, wobei ein erstes Blechteil scheibenförmig und ein zweites Blechteil topfförmig ausgebildet sind und mindestens eines der beiden Blechteile eine Blechdicke aufweist, wobei eines der beiden Blechteile im Bereich der mindestens einen Schweißnaht eine erhöhte Blechdicke aufweist.

Es ist Aufgabe der vorliegenden Erfindung, bei einem geschweißten Bauteil der eingangs genannten Art eine Schweißverbindung zu schaffen, welche höheren Belastungen standhält, ohne dass dadurch das Gewicht des Bauteiles, sein Massenträgheitsmoment und sein Bauvolumen wesentlich zunehmen. Es ist auch Aufgabe der Erfindung, ein geeignetes, vorteilhaftes Verfahren zur Herstellung des geschweißten Bauteiles sowie eine geeignete und vorteilhafte Vorrichtung zur Durchführung des Herstellverfahrens bereitzustellen.

Die Aufgabe der Erfindung wird durch die unabhängigen Ansprüche 1, 9, 12 und 15 gelöst. Vorteilhafte Ausgestaltungen ergeben sich aus den Unteransprüchen.

Erfindungsgemäß ist bei einem geschweißten Bauteil, insbesondere einem geschweißten Planetenradträger vorgesehen, dass eines der beiden Blechteile im Bereich der Schweißnaht oder der Schweißnähte eine erhöhte Blechdicke aufweist. Damit wird der Vorteil erreicht, dass eine längere oder tiefere Schweißnaht zwischen den zu verbindenden Blechteilen gelegt werden kann, woraus sich eine höhere Festigkeit für die Schweißverbindung ergibt. Insbesondere bei einem Planetenträger kann ein höheres Drehmoment übertragen werden. Da lediglich eine partielle, im Bereich der Schweißnaht angeordnete Aufdickung der Blechdicke erfolgt, ergibt sich nur ein geringfügiger Gewichtszuwachs für das geschweißte Bauteil. Auch das Massenträgheitsmoment, welches insbesondere bei einem Planetenträger von Bedeutung ist, nimmt nur unwesentlich zu. Gleiches gilt analog für das Bauvolumen des geschweißten Bauteiles bzw. Planetenträgers.

Nach einer bevorzugten Ausführungsform erfolgt die Aufdickung durch Umformung des Blechteiles, d. h. eine spanlose Formgebung, z. B. durch Stauchen oder Verdrängen des Blechmaterials. Nach der Aufdickung durch Umformung können beide Teile miteinander verschweißt werden.

Nach weiteren bevorzugten Ausführungsformen kann die Schweißnaht zur Verbindung der beiden Blechteile sowohl als Radialnaht als auch als Axialnaht ausgeführt werden. Damit sind unterschiedliche Gestaltungs- und Verbindungsformen möglich.

Nach einer weiteren bevorzugten Ausführungsform ist das Bauteil als Planetenträger eines Getriebes ausgebildet und weist als erstes Blechteil eine Führungsscheibe und als zweites Blechteil einen Steg oder einen Stegstern mit Stegarmen oder Steglappen auf, welche mit der Führungsscheibe verbunden werden. Der Planetenträger nimmt - wie z. B. aus dem eingangs genannten Stand der Technik bekannt - Planetenräder in sich auf und überträgt damit ein Drehmoment, welches von den Schweißnähten aufgenommen werden muss. Infolge der erfindungsgemäß vergrößerten Schweißnahttiefe lässt sich ein erhöhtes Drehmoment durch den Planetenträger übertragen.

Nach einer weiteren bevorzugten Ausführungsform wird die erhöhte Blechdicke an den stirnseitigen Enden der Stegarme oder -Lappen ausgebildet, welche stumpf auf die Führungsscheibe stoßen. In diesen Stumpfstoß wird eine Radialschweißnaht gelegt, vorzugsweise durch Laser-, Elektronenstrahlschweißen oder auch Kondensatorentladungsschweißen.

Nach einer weiteren bevorzugten Ausführungsform werden die Blechaufdickungen an der Führungsscheibe bzw. dem scheibenförmigen Blechteil vorgenommen, welches Aussparungen zur Aufnahme der Stegarme oder -lappen aufweist. Bei dieser Art von Verbindung zwischen Steg und Führungsscheibe wird vorzugsweise eine Axialnaht gelegt, durch Laser- oder Elektronenstrahlschweißen.

Die Aufgabe der Erfindung wird auch bei einem Verfahren durch die Merkmale des Patentanspruches 9 gelöst.

Erfindungsgemäß ist als erster Verfahrensschritt die Bereitstellung des zweiten Blechteiles, insbesondere des Steges mit einer Materialzugabe in axialer Richtung vorgesehen, d. h. der zylindermantelförmige Bereich des zweiten Blechteiles bzw. der Steglappen ist gegenüber dem Fertigmaß in axialer Richtung verlängert. Im zweiten Verfahrensschritt wird die Materialzugabe durch Anscheren und Stauchen umgeformt, wodurch die erhöhte Blechdicke, d. h. ein Materialzuwachs in radialer Richtung erreicht wird.

Nach einer bevorzugten Ausführungsform erfolgt das Stauchen nicht über die gesamte Stirnfläche der Materialzugabe, sondern nur partiell, d. h. entweder radial innen oder radial außen oder innen und außen. Der nicht gestauchte Bereich der Materialzugabe wird angeschert, sodass ein Materialüberstand stehen bleibt, der abschließend vorzugsweise spangebend entfernt wird. Der Vorteil der partiellen Stauchung besteht darin, dass nur relativ geringe Umformungskräfte aufgebracht werden müssen, sodass auch die Belastung des ersten Blechteiles oder des Steges relativ gering ist und keine unerwünschten Verformungen (Formabweichungen) entstehen.

In einem letzten Verfahrensschritt werden beide Blechteile gefügt, wobei die aufgedickten Bereiche mit dem scheibenförmigen Blechteil einen Stumpfstoß bilden, in welchen die Radialschweißnaht gelegt wird. Die Tiefe der Radialschweißnaht, d. h. ihre radiale Erstreckung entspricht dabei der erhöhten Blechdicke, auch Aufdickung genannt.

Die Aufgabe der Erfindung wird auch durch eine Vorrichtung mit den Merkmalen des Patenanspruches 12 gelöst.

Erfindungsgemäß ist die Vorrichtung zur Durchführung des vorgenannten Verfahrens, d. h. zum Ausformen der erhöhten Blechdicke durch Anscheren und Stauchen geeignet. Die Vorrichtung umfasst ein erstes Werkzeug, welches in axialer Richtung zustellbar ist und eine Planfläche aufweist, in welche eine Aussparung eingearbeitet ist. Bevorzugt wird die Aussparung in der Ebene der Planfläche durch mindestens eine Scherkante begrenzt. Beim axialen Zustellen des Werkzeuges trifft die Scherkante auf die Materialzugabe und schert das Material über den Weg der axialen Zustellung. Gleichzeitig wird das Material von der Planfläche des Werkzeuges gestaucht und derart verformt, dass sich eine Materialverdickung, eine so genannte Aufdickung ergibt.

Nach einer weiteren bevorzugten Ausführungsform umfasst die Vorrichtung ein zweites feststehendes Werkzeug, welches das erste Blechteil aufnimmt und abstützt und eine Matrizenform (Endform) aufweist, in welche das verdrängte Material der Materialzugabe fließen kann. Es erfolgt somit kein freies Stauchen, sondern ein Stauchen gegen eine feste Form, durch welche das Maß der Aufdickung definiert ist.

Die Aufgabe der Erfindung wird auch durch ein weiteres nebengeordnetes Verfahren mit den Merkmalen des Patentanspruches 15 gelöst.

Erfindungsgemäß wird zunächst das erste Blechteil, welches als Scheibe oder Führungsscheibe mit konstanter Blechstärke s ausgebildet ist, bereitgestellt. Anschließend wird das Blechteil im Bereich der Durchbrüche vorgeprägt, wobei eine Aufdickung des Blechteiles, d. h. eine erhöhte Blechdicke ausgeformt wird. Diese Prägung kann durch zwei in axial entgegengesetzten Richtungen zustellbare Stempel mit entsprechendem Profil erzeugt werden. Anschließend an das Vorprägen werden die Durchbrüche durch Ausstanzen hergestellt. Danach können das erste und das zweite Blechteil gefügt werden, indem die Arme oder Lappen des Steges in die Durchbrüche eingreifen und Axialschweißnähte gelegt werden.

Je nach Beanspruchung der Schwei βverbindung können für jeden Durchbruch eine radial innere oder eine radial äußere Axialnaht oder zwei Axialnähte im Bereich der Aufdickungen vorgesehen werden.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: einen Planetenträger nach dem Stand der Technik mit Radialschweißnaht,
- Fig. 2: ein weiterer Planetenträger nach dem Stand der Technik,
- Fig. 3: einen erfindungsgemäßen Steg mit beidseitig aufgedicktem Schweißnahtbereich,
- Fig. 4: einen Steg mit einseitig (außen) aufgedicktem Schweißnahtbereich,
- Fig. 5: einen Steg mit einseitig (innen) aufgedicktem Schweißnahtbereich,
- Fig. 6: den Steg gemäß Fig. 3 mit Umformwerkzeugen,
- Fig. 7: den Steg gemäß Fig. 4 mit Umformwerkzeugen,
- Fig. 8: den Steg gemäß Fig. 5 mit Umformwerkzeugen,
- Fig. 9: einen Planetenträger nach dem Stand der Technik mit Axialschweißnaht,
- Fig. 9a: einen Schnitt gemäß Schnittebene A-A in Fig. 9,
- Fig. 10: einen erfindungsgemäßen Planetenträger mit Aufdickung und Axialschweißnaht außen,
- Fig. 19a: einen Schnitt gemäß der Schnittebene A-A in Fig. 10,

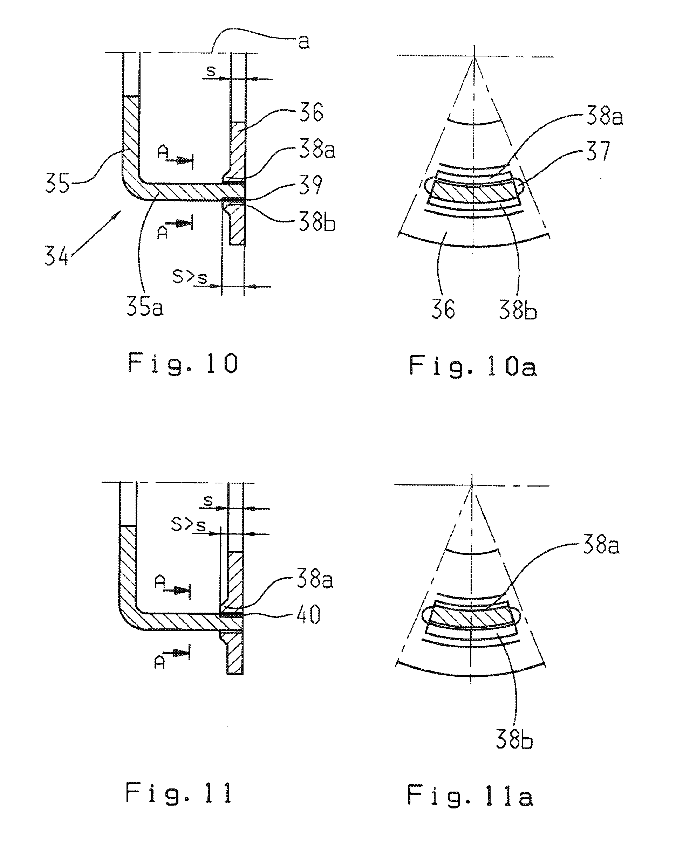

- Fig. 11: einen erfindungsgemäßen Planetenträger mit Axialschweißnaht (innen),
- Fig. 11a: einen Schnitt gemäß Schnittebene A-A,

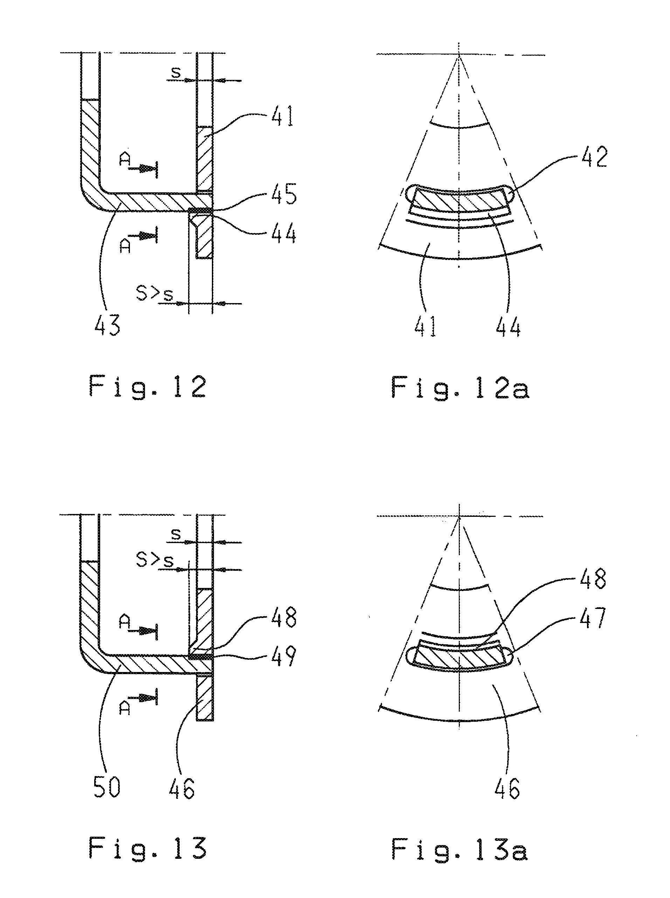

- Fig. 12: einen erfindungemäßen Planetenträger mit einseitig außen aufgedickter Führungsscheibe,
- Fig. 12a: einen Schnitt gemäß Schnittebene A-A,
- Fig. 13: einen erfindungsgemäßen Planetenträger mit einseitig innen aufgedickter Führungsscheibe,
- Fig. 13a: einen Schnitt gemäß Schnittebene A-A,

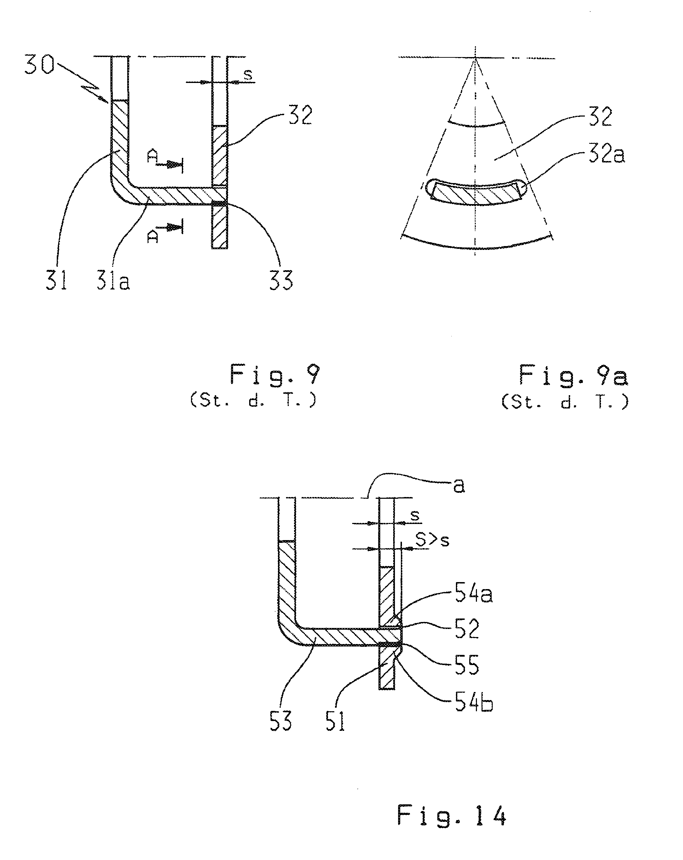

- Fig. 14: einen erfindungsgemäßen Planetenträger mit Axialschweißnaht und aufgedickter Führungsscheibe,

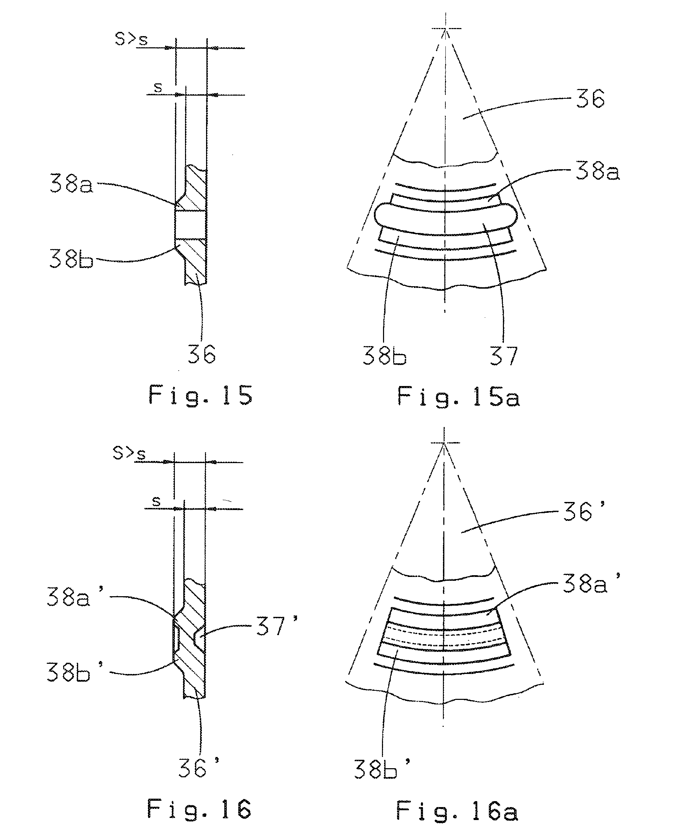

- Fig. 15: einen Teilschnitt im Bereich einer aufgedickten Führungsscheibe wie in Fig. 10 oder Fig. 11,
- Fig. 15a: eine Teilansicht auf den aufgedickten Bereich,
- Fig. 16: eine Zwischenstufe beim Herstellen der Aufdickung,
- Fig. 16a: eine Teilansicht auf den aufgedickten Bereich,

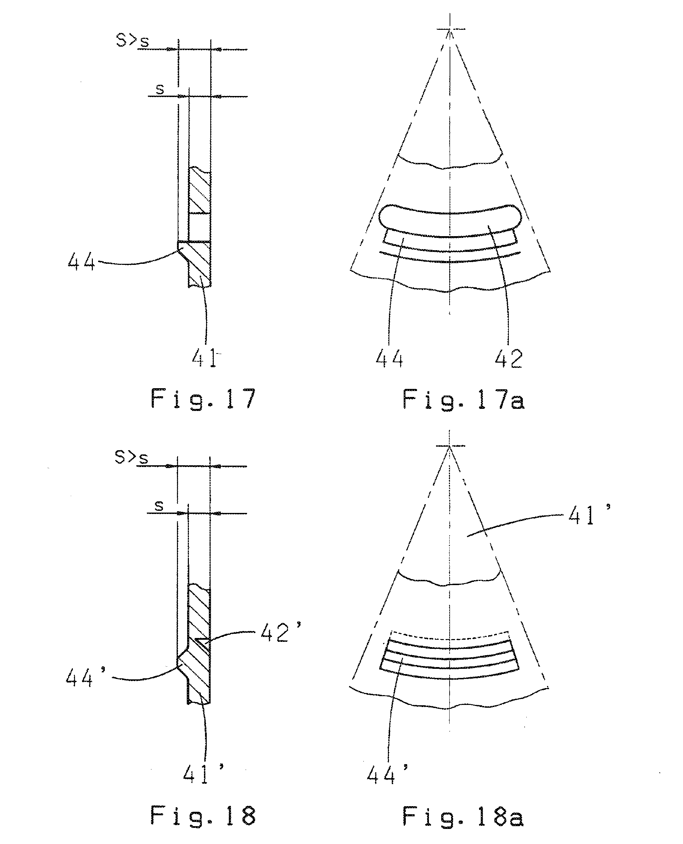

- Fig. 17: einen Teilschnitt einer einseitig aufgedickten Führungsscheibe wie in Fig. 12,
- Fig. 17a: eine Teilansicht auf den aufgedickten Bereich,
- Fig. 18: eine Zwischenstufe bei der Herstellung des aufgedickten Bereiches gemäß Fig. 17,
- Fig. 18a: eine Teilansicht auf den aufgedickten Bereich,

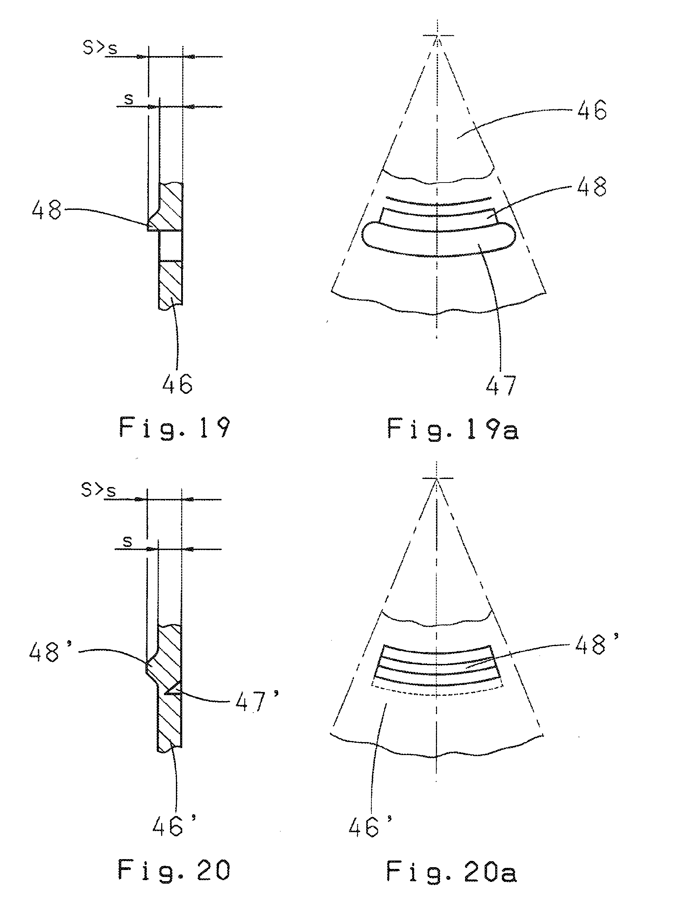

- Fig. 19: einen Teilschnitt der einseitig aufgedickten Führungsscheibe wie in Fig. 13,
- Fig. 19: eine Teilansicht auf den aufgedickten Bereich,
- Fig. 20: eine Zwischenstufe bei der Herstellung des aufgedickten Bereiches gemäß Fig. 19 und
- Fig. 20a: eine Teilansicht auf den aufgedickten Bereich.

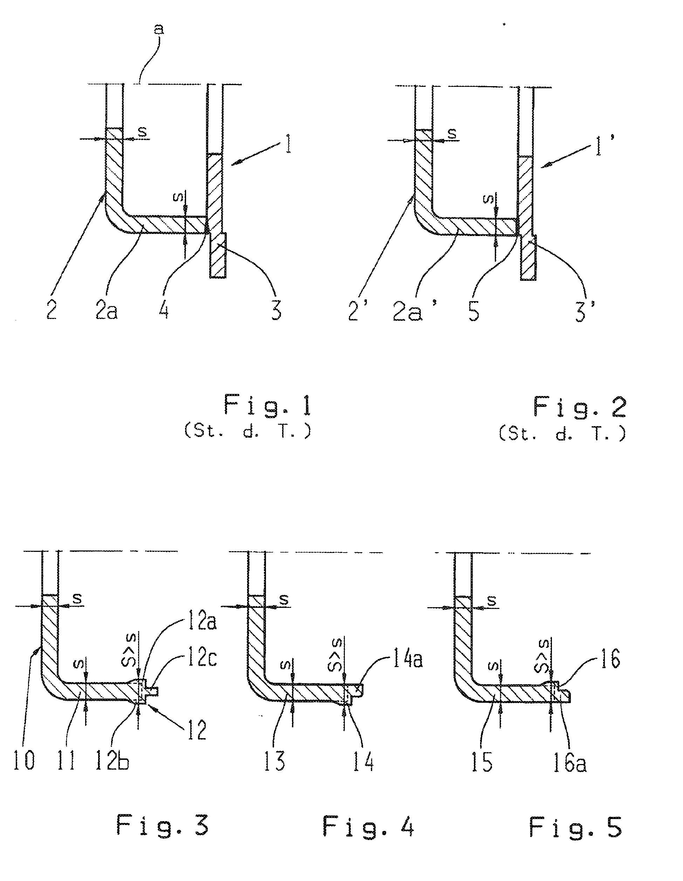

Fig. 1 zeigt einen Planetenradträger 1 nach dem Stand der Technik im Halbschnitt, wobei die strichpunktierte Linie a die Mittel- und Rotationsachse darstellt. Der Planetenradträger 1, welcher in einem Umlauf- oder Planetengetriebe der Aufnahme von nicht dargestellten Planetenrädern dient, umfasst einen topfförmig ausgebildeten Steg 2 und eine Führungsscheibe 3, beide Teile sind aus Stahlblech hergestellt. Der Steg 2 weist auf seinem Umfang - wie aus dem Stand der Technik bekannt - drei oder vier Stegarme oder Steglappen auf, in Fig. 1 mit 2a bezeichnet. Der Steglappen 2a ist mit der Führungsscheibe 3 durch eine Schweißnaht 4, welche als Radialnaht ausgebildet ist, stoffschlüssig verbunden. Der durch Umformung hergestellte Steg 2 mit Steglappen 2a weist eine konstante Blechstärke s auf. Die Radialschweißnaht erstreckt sich maximal über die gesamte Blechstärke s. Die Tiefe der Schweißnaht 4, d. h. deren radiale Erstreckung bestimmt und begrenzt die in der Schweißnaht übertragbaren Kräfte. Die hier dargestellte Radialschweißnaht 4 wird durch Laserstrahl- oder Elektronenstrahlschweißen hergestellt.

Fig. 2 zeigt ein ähnliches Ausführungsbeispiel eines bekannten Planetenradträgers 1', welcher einen Steg 2' mit Steglappen 2a' sowie eine Führungsscheibe 3' aufweist. Steg 2' und Steglappen 2a' weisen ebenfalls eine konstante Blechstärke s auf. Der Steglappen 2a' ist mit der Führungsscheibe durch eine Radialschweißnaht 5 verbunden, welche durch Kondensatorentladungsschweißen hergestellt ist. Auch hier entspricht die Breite der Schweißnaht der Blechstärke s. Die Breite der Schweißnaht 5, d. h. ihre radiale Erstreckung ist maßgeblich für die übertragbaren Kräfte in der Schweißnaht.

Fig. 3 zeigt ein erstes Ausführungsbeispiel der Erfindung für einen Steg 10 mit Steglappen 11, welche endseitig eine beidseitige Aufdickung 12 aufweisen. Bezogen auf die Rotationsachse a besteht die Aufdickung 12 aus einer Teilaufdickung 12a, die radial nach innen gerichtet ist, und aus einer Teilaufdickung 12b, welche radial nach außen gerichtet ist. Zwischen den beiden Teilaufdickungen 12a, 12b befindet sich ein Materialüberstand 12c, welcher sich als Folge des Umformprozesses ergibt, welcher unten ausführlich beschrieben wird. Während der Steg 10 und der Steglappen 11 eine konstante Blechdicke s aufweisen, weist die Aufdickung 12 eine erhöhte Blechdicke S auf, wobei S > s ist. Der Materialüberstand 12c wird vor dem Verschweißen des Steges 10 mit einer hier nicht dargestellten Führungsscheibe vorzugsweise spangebend entfernt. Durch die Aufdickung 12 ist es möglich, Führungsscheibe und Steg durch eine tiefere und damit tragfähigere Schweißnaht zu verbinden. Die Aufdickung erstreckt sich nur über den der Schweißnaht benachbarten Bereich, sodass sich für den Planetenträger nur eine geringfügige Gewichtserhöhung ergibt. Auch das Trägheitsmoment wird kaum größer. Die Aufdickung ist bauraumneutral, d. h. der Planetenträger, ausgestattet mit dem erfindungemäß aufgedickten Steg 10, weist keine größere Bautiefe in axialer Richtung auf als beim oben geschilderten Stand der Technik.

Fig. 4 zeigt ein weiteres Ausführungsbeispiel der Erfindung für einen Steglappen 13 mit einer endseitigen Aufdickung 14 und einem Materialüberstand 14a. Die Aufdickung weist eine erhöhte Blechstärke S auf, die größer ist als die übrige Blechstärke s des Steglappens 13. Im Unterschied zum vorherigen Ausführungsbeispiel ist der Endbereich des Steglappens 13 nur auf der radial außen liegenden Seite durch Umformung aufgedickt.

Fig. 5 zeigt ein weiteres Ausführungsbeispiel der Erfindung für einen Steglappen 15 mit einer Aufdickung 16, welche nach radial innen (bezogen auf die Rotationsachse a) gerichtet ist und eine erhöhte Blechstärke S aufweist, welche größer als die übrige Blechdicke s des Steglappens 15 ist. Der aus der Umformung stehen gebliebene Materialüberstand 16a wird anschließend entfernt. Die strichpunktierte Linie am stirnseitigen Ende des Steglappens 15 kennzeichnet die Kontur ohne erfindungsgemäße Aufdickung.

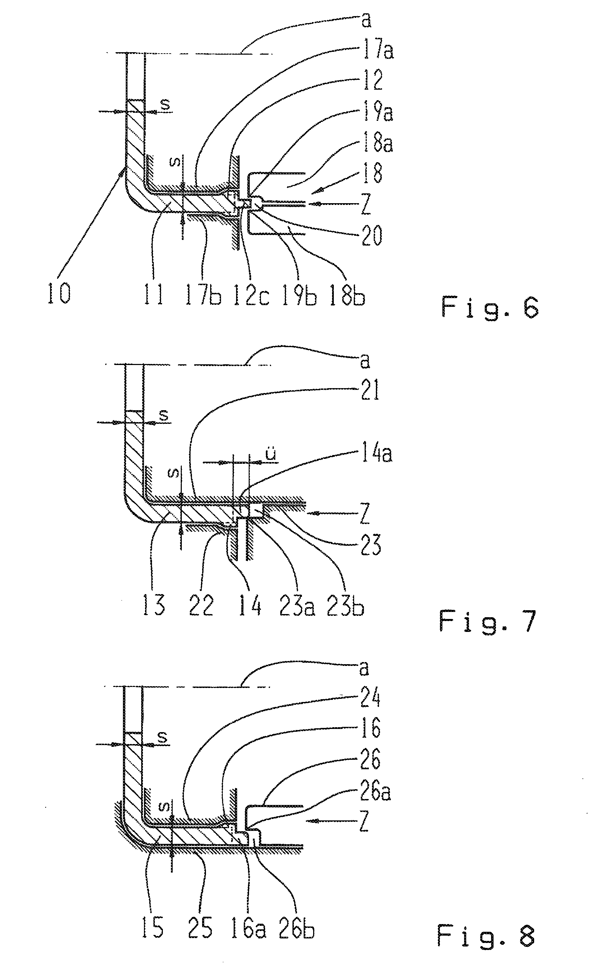

Fig. 6 zeigt die Herstellung des Ausführungsbeispieles gemäß Fig. 3, weshalb die gleichen Bezugszahlen für gleiche Teile verwendet werden. Der Steglappen 11 ist in einem zweiteiligen Werkzeug 17a, 17b, durch Schraffur angedeutet, aufgenommen und abgestützt, wobei das Werkzeug 17a, 17b im Bereich der Aufdickung 12 eine entsprechend Hohlform aufweist, in welche das Material bei der Umformung verdrängt werden kann. Ein zweites bewegliches Werkzeug 18, umfassend zwei Werkzeughälften 18a, 18b, wirkt als Stempel und wird in Richtung des Pfeiles Z auf den eingespannten Steglappen 11 zugestellt. Das Werkzeug 18 weist eine zentrale Ausnehmung 20 auf, welche durch zwei Scherkanten 19a, 19b stirnseitig begrenzt ist. Die Darstellung gemäß Fig. 6 zeigt den Steglappen 11 mit Aufdickung 12 nach der Umformung. Das Werkzeug 18 befindet sich bereits in seiner zurückgezogenen Position. Vor der Umformung weist der Steglappen eine nicht dargestellte Materialzugabe in axialer Richtung (Achse a) auf, die etwa der Länge des Materialüberstandes 12c entspricht. Beim Beginn des Umformvorganges wird das Werkzeug 18 in Richtung des Pfeiles Z zugestellt, wobei die Scherkanten 19a, 19b in die Materialzugabe einschneiden, das Material anscheren und gleichzeitig in Richtung des Pfeiles Z anstauchen. Das gestauchte Material wird dabei nach außen in die Form des Werkzeuges 17a, 71 b verdrängt. Das Werkzeug 18 wird auf Anschlag bis zum Werkzeug 17a, 17b gefahren und anschließend zurückgezogen. Wie bereits oben erwähnt, wird der Materialüberstand 12c nach der Umformung entfernt. Danach ist der Steg 10 mit Steglappen 11 fertig für eine Verschweißung mit der Führungsscheibe.

Fig. 7 zeigt die Herstellung der Aufdickung 14 im Ausführungsbeispiel gemäß Fig. 4 durch Umformung - es werden die gleichen Bezugszeichen wie in Fig. 4 verwendet. Der Steglappen 13 ist in einem zweiteiligen fest angeordneten Werkzeug 21, 22 aufgenommen und eingespannt, wobei das in der Zeichnung unten angeordnete Werkzeug eine Ausnehmung für die Aufdickung 14 aufweist. Ein bewegliches, in Richtung des Pfeils Z zustellbares Werkzeug 23 weist eine Scherkante 23a und eine Ausnehmung 23b auf. Der Steglappen 13 weist vor der Umformung stirnseitig eine (nicht dargestellte) Materialzugabe auf, welche sich in axialer Richtung (a) so weit erstreckt, wie das Maß ü des Materialüberstandes 14a. Der Umformvorgang erfolgt in der Weise, dass das bewegliche Werkzeug 23 in Richtung Z zugestellt wird, bis die Scherkante 23a in die Materialzugabe einschneidet, das Material anschert und gleichzeitig so weit staucht, bis das Material in die Ausnehmung des Werkzeuges 22 verdrängt worden ist. Der fertig umgeformte Steglappen 13 weist dann eine radial außen liegende Aufdickung 14 auf. Die Stirnfläche des Steglappens 13 mit der Materialzugabe wird also nur partiell gestaucht, was den Vorteil hat, dass nur relativ geringe Umformkräfte in Richtung Z erforderlich sind. Der Materialüberstand 14a muss vor dem Schweißen entfernt werden, sodass man eine glatte Stirnfläche für die Verschweißung des Steglappens 13 mit der nicht dargestellten Führungsscheibe erhält.

Fig. 8 zeigt die umformtechnische Herstellung des Ausführungsbeispiels gemäß Fig. 5, d. h. für den Steglappen 15 mit einer radial innen liegenden Aufdickung 16. Der Steglappen 15 ist in einem zweiteiligen fest angeordneten Werkzeug 24, 25 aufgenommen und eingespannt, wobei das radial innen liegende Werkzeug 24 eine der Aufdickung 16 entsprechende Ausnehmung aufweist. Ein bewegliches Werkzeug 26 weist eine Scherkante 26a und eine stirnseitige Ausnehmung 26b auf. Die Zustellung und der Umformvorgang vollziehen sich ebenfalls in Richtung des Pfeiles Z. Das Material der stirnseitigen Materialzugabe wird aufgrund der Gestaltung der Werkzeuge 24, 25, 26 nach radial innen verdrängt und bildet die Aufdickung 16. Der verbleibende Materialüberstand 16a - aufgrund der Ausnehmung 26b im Werkzeug 26 - wird anschließend entfernt.

Die oben beschriebenen Werkzeuge sind in ihrer Form abwandelbar. Wesentlich ist einerseits, dass nur eine partielle Stauchung der Stirnfläche erfolgt, entweder beidseitig oder nur auf einer Seite - dadurch werden die Umformkräfte reduziert. Andererseits weist das feststehende Werkzeug eine oder zwei kalibrierte Ausnehmungen auf, damit die Aufdickung jeweils das gleiche Endmaß erreicht.

Fig. 9 zeigt einen Halbschnitt eines bekannten Planetenträgers 30, welcher einen Steg 31 und eine Führungsscheibe 32 mit der Materialstärke s aufweist. Der Steg 31 ist als Stegstern ausgebildet und weist auf seinem Umfang drei oder mehr Stegarme oder Steglappen 31a auf, welche durch eine Axialschweißnaht 33 mit der Führungsscheibe 32 verbunden sind.

Fig. 9a zeigt einen Schnitt durch den Steglappen 31 a in der Ebene A-A mit Blickrichtung auf die Führungsscheibe 32, welche einen nierenförmigen Durchbruch 32a aufweist. Der Steglappen 31 a ist stirnseitig in den Durchbruch 32a eingesetzt und mit der Führungsscheibe 32 durch die Axialschweißnaht 33 verbunden. Diese Befestigung nach dem Stand der Technik stellt eine Alternative gegenüber den Radialschweißnähten gemäß Fig. 1 und Fig. 2 dar. Die Tiefe der Schweißnaht 33 entspricht der Materialstärke s der Führungsscheibe 32, die somit die maximale Tiefe der Schweißnaht 33 und damit die Größe des durch die Schweißnaht 33 übertragbaren Moments des Planetenträgers 30 bestimmt.

Fig. 10 und Fig. 10a zeigen einen erfindungsgemäßen Planetenträger 34, welcher einen Steg 35 mit Steglappen 35a sowie eine Führungsscheibe 36 mit der Materialdicke s umfasst. Beide Teile 35, 36 sind aus Stahlblech hergestellt und werden durch Schweißen gefügt. Die Führungsscheibe 36 weist einen nierenförmigen Durchbruch 37 auf, welcher das stirnseitige Ende des Steglappens 35a aufnimmt. Erfindungsgemäß ist die Führungsscheibe 36 im Bereich des Durchbruches 37 auf der radial innen und der radial außen liegenden Seite durch Umformung aufgedickt und weist eine radial innen liegende Aufdickung 38a sowie eine radial außen liegende Aufdickung 38b auf. Dadurch ergibt sich im Bereich des Durchbruches 37 eine erhöhte Blechdicke S > s. Der Steglappen 35a ist im Bereich des Durchbruches 37 durch eine Axialschweißnaht 39 fügetechnisch mit der Führungsscheibe 36 verbunden. Die Schweißnaht 39 weist aufgrund der Aufdickung 38b eine Tiefe von maximal S auf, welche größer als die Materialstärke s der Führungsscheibe 36 ist. Daher ist die Axialschweißnaht 39 tragfähiger.

Fig. 11 und Fig. 11 a zeigen ein bezüglich der Verschweißung abgewandeltes Ausführungsbeispiel des Planetenträgers 34 in Fig. 10, weshalb für gleiche Teile gleiche Bezugszeichen wie in Fig. 10 verwendet werden. Die Axialschweißnaht 40 ist hier radial innen angeordnet, d. h. im Bereich der radial innen liegenden Aufdickung 38a. Auch hier weist die Axialschweißnaht 40 eine auf das Maß S vergrößerte Tiefe gegenüber der Materialstärke s der Führungsscheibe 36 auf.

Fig. 12 und Fig. 12a zeigen ein weiteres Ausführungsbeispiel der Erfindung für eine einseitig aufgedickte Führungsscheibe 41 mit einem Durchbruch 42, welcher das Stirnende eines Steglappens 43 aufnimmt. Auf der in Bezug auf die Rotationsachse a radial außen liegenden Seite des Durchbruches 42 ist eine Aufdickung 44 ausgeformt, welche eine erhöhte Blechdicke S aufweist, welche größer als die Blechstärke s der Führungsscheibe 41 ist. Im Bereich der Aufdickung 44 ist eine Axialschweißnaht 45 gelegt, deren Breite ebenfalls S beträgt.

Fig. 13 und Fig. 13a zeigen eine Abwandlung des Ausführungsbeispieles gemäß Fig. 12: Bei einer Führungsscheibe 46 mit einem Durchbruch 47 ist auf der radial innen liegenden Seite eine Aufdickung 48 ausgeformt. Eine Axialschweißnaht 49 verbindet die Führungsscheibe 46 mit einem Steglappen 50, welcher in dem Durchbruch 47 aufgenommen ist. Die Axialschweißnaht 49 weist eine Tiefe auf, welche der erhöhten Blechstärke S entspricht.

Fig. 14 zeigt ein abgewandeltes Ausführungsbeispiel der Erfindung für eine Führungsscheibe 51 mit der Blechdicke s. Die Führungsscheibe 51 weist einen Durchbruch 52 auf, in welchem das Ende eines Steglappens 53 aufgenommen ist. Der Durchbruch 52 weist beiderseits, d. h. zur radial innen und zur radial außen liegenden Seite jeweils eine Aufdickung 54a, 54b auf, welche eine erhöhte Blechdicke S > s aufweist. Eine Axialschweißnaht 55 verbindet den Steglappen 53 mit der Führungsscheibe 51. Die Aufdickungen 54a, 54b sind auf der Außenseite der Führungsscheibe 51 angeordnet (in der Zeichnung: die rechte Seite) - insofern ergibt sich ein geringfügiger Bauraumzuwachs des Planetenträgers in axialer Richtung (Achse a). Diese Ausführungsform kann ebenso abgewandelt werden wie die vorherigen Ausführungsformen gemäß Fig. 12 und Fig. 13, d. h. mit nur einer Aufdickung, die jeweils radial innerhalb oder radial außerhalb des Durchbruches 52 angeordnet ist. Gleiches gilt für die Lage der Axialschweißnaht 55.

Fig. 15 zeigt eine vergrößerte Darstellung der Führungsscheibe 36 aus dem Ausführungsbeispiel gemäß Fig. 10 mit beiderseitigen Aufdickungen 38a, 38b.

Fig. 15a zeigt eine Ansicht in axialer Richtung auf die Führungsscheibe 36 mit Durchbruch 37.

Fig. 16 und Fig. 16a zeigen eine vorgeprägte Führungsscheibe 36', wie sie bei einem Umformverfahren zur Herstellung der Führungsscheibe 36 gemäß Fig. 15 als Vorstufe entsteht. Ausgangsmaterial ist eine glatte Führungsscheibe mit der Blechdicke s. Diese wird mittels zweier gegeneinander wirkender, nicht dargestellter Prägewerkzeuge derart verformt, dass auf einer Seite eine Einprägung 37' und auf der anderen Seite zwei Ausprägungen 38a' 38b' entstehen, durch welche die erhöhte Blechdicke S erreicht wird. In einem weiteren Verfahrensschritt wird dann der Durchbruch 37 ausgestanzt.

Fig. 17 zeigt die Führungsscheibe 41 gemäß Ausführungsbeispiel in Fig. 12 mit einer einseitigen Aufdickung 44 in vergrößerter Darstellung.

Fig. 18 und Fig. 18a zeigen ein Umformverfahren zur Herstellung der Führungsscheibe 41 als vorgeformte Führungsscheibe 41'. Aus der glatten Führungsscheibe mit einer konstanten Blechdicke s wird eine vorgeprägte Scheibe 41' mit einer Einprägung 42' auf der einen Seite und einer Ausprägung 44' auf der anderen Seite. Im Bereich der Ausprägung 44' erhält die Führungsscheibe 41' eine erhöhte Blechdicke S > s.

Fig. 19 und Fig. 19a zeigen die Führungsscheibe 46 gemäß Ausführungsbeispiel in Fig. 13 mit der radial innen liegenden Aufdickung 48 in vergrößerter Darstellung als Einzelteil.

Fig. 20 und Fig. 20a zeigen eine vorgeformte Führungsscheibe 46' nach einem ersten Verfahrensschritt eines Umformprozesses. Analog dem vorhergehenden Ausführungsbeispiel in Fig. 18 ergibt sich nach dem ersten Umformschritt eine Einprägung 47 auf der einen und eine Ausprägung 48' auf der anderen Seite. Durch die Ausprägung 48' wird die Blechdicke auf S > s erhöht. In einem zweiten Verfahrensschritt wird der Durchbruch 47 ausgestanzt, und man erhält die Führungsscheibe 46 gemäß Fig. 19.

In den oben genannten Ausführungsbeispielen wurde jeweils ein geschweißter Planetenträger, umfassend einen Steg und eine Führungsscheibe, beschrieben. Im Hinblick auf den Rahmen der Erfindung ist klarzustellen, dass der Planetenträger lediglich eine besondere Ausführungsform eines geschweißten Bauteiles ist und der Steg sowie die Führungsscheibe Ausführungsbeispiele eines topf- oder kronenförmigen Blechteiles bzw. eines scheibenförmigen Blechteiles sind.

### Bezugszeichen

- 1, 1': Planetenträger
- 2, 2': Steg
- 2a, 2a': Steglappen
- 3, 3': Führungsscheibe
- 4: Schweißnaht
- 5: Schweißnaht

- 10: Steg
- 11: Steglappen
- 12: Aufdickung
- 12a: innere Aufdickung
- 12b: äußere Aufdickung
- 12c: Materialüberstand
- 13: Steglappen
- 14: Aufdickung
- 14a: Materialüberstand
- 15: Steglappen
- 16: Aufdickung
- 16a: Materialüberstand
- 17a: Werkzeug, innen
- 17b: Werkzeug, außen
- 18: Werkzeug, beweglich
- 18a: Werkzeughälfte
- 18b: Werkzeughälfte
- 19a: Scherkante
- 19b: Scherkante

- 20: Ausnehmung
- 21: Werkzeug, fest
- 22: Werkzeug, fest
- 23: Werkzeug, beweglich
- 23a: Scherkante
- 23b: Ausnehmung
- 24: Werkzeug, fest
- 25: Werkzeug, fest
- 26: Werkzeug, beweglich
- 26a: Scherkante
- 26b: Ausnehmung

- 30: Planetenträger
- 31: Steg
- 31a: Steglappen
- 32: Führungsscheibe
- 32a: Durchbruch
- 33: Axialschweißnaht
- 34: Planetenträger
- 35: Steg
- 35a: Steglappen
- 36: Führungsscheibe
- 37: Durchbruch
- 38a, 38a': Aufdickung, innen
- 38b, 38b': Aufdickung, außen
- 39: Axialschweißnaht, außen

- 40: Axialschweißnaht, innen
- 41: Führungsscheibe
- 42: Durchbruch
- 43: Steglappen
- 44, 44': Aufdickung
- 45: Axialschweißnaht
- 46: Führungsscheibe
- 47: Durchbruch
- 48, 48': Aufdickung
- 49: Axialschweißnaht

- 50: Steglappen
- 51: Führungsscheibe
- 52: Durchbruch
- 53: Steglappen
- 54a: Aufdickung, innen
- 54b: Aufdickung, außen
- 55: Axialschweißnaht

## Patentansprüche

1. Geschweißtes Bauteil (1, 30), umfassend zwei durch mindestens eine Schweißnaht (4, 33) verbundene Blechteile (2, 3, 31, 32), wobei ein erstes Blechteil (32) scheibenförmig und ein zweites Blechteil (31) topfförmig ausgebildet sind und mindestens eines der beiden Blechteile (2, 3) eine Blechdicke (s) aufweist und eines (11, 13, 15; 36, 41, 46, 51) der beiden Blechteile im Bereich der mindestens einen Schweißnaht (39, 40, 45, 49, 55) eine erhöhte Blechdicke (S) aufweist, **dadurch gekennzeichnet, dass** die erhöhte Blechdicke (S) durch Umformung des Blechteiles (11, 13, 15, 36, 41, 46, 51) hersgestellt ist.

2. Bauteil nach Anspruch 1, **dadurch gekennzeichnet, dass** die mindestens eine Schweißnaht als Radialschweißnaht (4) ausgebildet ist.

3. Bauteil nach Anspruch 1, **dadurch gekennzeichnet, dass** die mindestens eine Schweißnaht als Axialschweißnaht (39, 40, 45, 49, 55) ausgebildet ist.

4. Bauteil nach einem der Ansprüche 1 bis 3, **dadurch gekennzeichnet, dass** das Bauteil als Planetenträger (10, 34) eines Getriebes, das erste scheibenförmige Blechteil als Führungsscheibe (36, 41, 46, 51) und dass zweite topfförmige Blechteil als Steg (10, 35, 43, 50, 53) ausgebildet sind.

5. Bauteil nach Anspruch 2 oder 2 und 4, **dadurch gekennzeichnet, dass** die erhöhte Blechdicke (S) am topfförmigen Blechteil respektive dem Steg (10, 13, 15) angeordnet ist.

6. Bauteil nach Anspruch 3 oder 3 und 4, **dadurch gekennzeichnet, dass** die erhöhte Blechdicke (S) am scheibenförmigen Blechteil respektive der Führungsscheibe (36, 41, 46, 51) angeordnet ist.

7. Bauteil nach Anspruch 6, **dadurch gekennzeichnet, dass** die Führungsscheibe (36, 41, 46, 51) über den Umfang verteilt angeordnete Durchbrüche (37, 42, 47, 52) aufweist, in welche Stegarme oder Steglappen (35a, 43, 50, 53) eingreifen und dass die erhöhte Blechdicke (S) im Bereich der Durchbrüche (37, 42, 47, 52) ausgeformt ist.

8. Bauteil nach Anspruch 7, **dadurch gekennzeichnet, dass** die mindestens eine Axialschweißnaht (39, 40, 45, 49, 55) im Bereich der Durchbrüche (37, 42, 47) angeordnet ist.

9. Verfahren zur Herstellung eines Bauteiles nach einem der Ansprüche 1, 2, 4 oder 5, **gekennzeichnet durch** folgende Verfahrensschritte:
- Bereitstellen des zweiten topfförmigen Blechteiles respektive des Steges (11, 13, 15) mit einer Materialzugabe in axialer Richtung,
- Anscheren und Stauchen der Materialzugabe in axialer Richtung (a) und
- Ausformen der erhöhten Blechdicke(S).

10. Verfahren nach Anspruch 9, **dadurch gekennzeichnet, dass** die Materialzugabe partiell in einem äußeren Bereich oder beiden äußeren Bereichen gestaucht wird.

11. Verfahren nach Anspruch 9 oder 10, **dadurch gekennzeichnet, dass** ein nach der Umformung verbleibender Materialüberstand (12c, 14a, 16a) entfernt wird.

12. Vorrichtung zur Durchführung des Verfahrens nach Anspruch 9, 10 oder 11, **gekennzeichnet durch** ein erstes in axialer Richtung (Z) zustellbares Werkzeug (18, 18a, 18b, 23, 26) mit einer stirnseitigen Aussparung (20, 23b, 26b).

13. Vorrichtung nach Anspruch 12, **dadurch gekennzeichnet, dass** die Aussparung (20, 23b, 26b) stirnseitig durch mindestens eine Scherkante (19a, 19b, 23a, 26a) begrenzt wird.

14. Vorrichtung nach Anspruch 12 oder 13, **gekennzeichnet durch** ein zweites feststehendes, das topfförmige Blechteil respektive den Steg (11, 13, 15) aufnehmendes Werkzeug (17a, 17b, 21, 22, 24, 25), welches eine Endform für den zu stauchenden Bereich (12, 14, 16) des Blechteiles (11, 13, 15) aufweist.

15. Verfahren zur Herstellung des Bauteiles gemäß Anspruch 1, 3, 4, 6, 7 oder 8, **gekennzeichnet durch** folgende Verfahrensschritte:
- Bereitstellen des ersten scheibenförmigen Blechteiles respektive der Führungsscheibe (36, 41, 46) mit konstanter Blechdicke (s),
- Vorprägen des scheibenförmigen Blechteiles und Ausprägen der erhöhten Blechdicke (S),
- Ausstanzen der Durchbrüche (37, 42, 47),
- Fügen der beiden Blechteile (35, 36, 41, 43, 46, 50, 51, 53) und Legen der Axialschweißnaht (39, 40, 45, 49, 55).

## Claims

1. Welded component (1, 30), comprising two sheet-metal parts (2, 3, 31, 32) connected by at least one weld seam (4, 33), a first sheet-metal part (32) being of a disc-shaped form and a second sheet-metal part (31) being of a cup-shaped form and at least one of the two sheet-metal parts (2, 3) having a sheet thickness (s) and one (11, 13, 15; 36, 41, 46 51) of the two sheet-metal parts having in the region of the at least one weld seam (39, 40, 45, 49, 55) an increased sheet thickness (S), **characterized in that** the increased sheet thickness (S) is produced by shaping of the sheet-metal part (11, 13, 15, 36, 41, 46, 51).

2. Component according to Claim 1, **characterized in that** the at least one weld seam is formed as a radial weld seam (4).

3. Component according to Claim 1, **characterized in that** the at least one weld seam is formed as an axial weld seam (39, 40, 45, 49, 55).

4. Component according to one of Claims 1 to 3, **characterized in that** the component is formed as a planet carrier (10, 34) of a gear mechanism, the first, disc-shaped sheet-metal part is formed as a guide disc (36, 41, 46, 51) and the second, cup-shaped sheet-metal part is formed as a web (10, 35, 43, 50, 53).

5. Component according to Claim 2 or Claims 2 and 4, **characterized in that** the increased sheet thickness (S) is arranged on the cup-shaped sheet-metal part or the web (10, 13, 15).

6. Component according to Claim 3 or Claims 3 and 4, **characterized in that** the increased sheet metal thickness (S) is arranged on the disc-shaped sheet-metal part or the guide disc (36, 41, 46, 51).

7. Component according to Claim 6, **characterized in that** the guide disc (36, 41, 46, 51) has apertures (37, 42, 47, 52), which are arranged such that they are distributed around the circumference and in which web arms or web lopes (35a, 43, 50, 53) engage, and **in that** the increased sheet thickness (S) is formed in the region of the apertures (37, 42, 47, 52).

8. Component according to Claim 7, **characterized in that** the at least one axial weld seam (39, 40, 45, 49, 55) is arranged in the region of the apertures (37, 42, 47).

9. Method for producing a component according to one of Claims 1, 2, 4 or 5, **characterized by** the following method steps:
- providing the second, cup-shaped sheet-metal part or the web (11, 13, 15) with surplus material in the axial direction and
- shearing and compressing the surplus material in the axial direction (a) and
- forming the increased sheet thickness (S).

10. Method according to Claim 9, **characterized in that** the surplus material is partially compressed in one outer region or both outer regions.

11. Method according to Claim 9 or 10, **characterized in that** a material projection (12c, 14a, 16a) remaining after the shaping is removed.

12. Device for carrying out the method according to Claim 9, 10 or 11, **characterized by** a first tool (18, 18a, 18b, 23, 26), which can be fed in in the axial direction (Z) and has a recess (20, 23b, 26b) on its end face.

13. Device according to Claim 12, **characterized in that** the recess (20, 23b, 26b) is delimited at the end face by at least one shearing edge (19a, 19b, 23a, 26a) .

14. Device according to Claim 12 or 13, **characterized by** a second, fixed tool (17a, 17b, 21, 22, 24, 25), which receives the cup-shaped sheet-metal part or the web (11, 13, 15) and has an end form for the region (12, 14, 16) to be compressed of the sheet-metal part (11, 13, 15).

15. Method for producing the component according to Claim 1, 3, 4, 6, 7 or 8, **characterized by** the following method steps:
- providing the first, disc-shaped sheet-metal part or the guide disc (36, 41, 46) with a constant sheet thickness (s),
- pre-stamping the disc-shaped sheet-metal part and developing the increased sheet thickness (S),
- punching out the apertures (37, 42, 47),
- joining the two sheet-metal parts (35, 36, 41, 43, 46, 50, 51, 53) and placing the axial weld seam (39, 40, 45, 49, 55).

## Revendications

1. Composant soudé (1, 30), comprenant deux pièces en tôle (2, 3, 31, 32) connectées par au moins un joint de soudure (4, 33), une première pièce en tôle (32) étant réalisée sous forme de plaque et une deuxième pièce en tôle (31) étant réalisée sous forme de pot et au moins l'une des deux pièces en tôle (2, 3) présentant une épaisseur de tôle (s) et l'une (11, 13, 15 ; 36, 41, 46, 51) des deux pièces en tôle présentant, dans la région de l'au moins un joint de soudure (39, 40, 45, 49, 55), une plus grosse épaisseur de tôle (S), **caractérisé en ce que** la plus grosse épaisseur de tôle (S) est fabriquée par déformation de la pièce en tôle (11, 13, 15, 36, 41, 46, 51).

2. Composant selon la revendication 1, **caractérisé en ce que** l' au moins un joint de soudure est réalisé sous forme de joint de soudure radial (4).

3. Composant selon la revendication 1, **caractérisé en ce que** l'au moins un joint de soudure est réalisé sous forme de joint de soudure axial (39, 40, 45, 49, 55).

4. Composant selon l'une quelconque des revendications 1 à 3, **caractérisé en ce que** le composant est réalisé sous forme de porte-planétaire (10, 34) d'une boîte de vitesses, la première pièce en tôle en forme de plaque est réalisée sous forme de plaque de guidage (36, 41, 46, 51) et la deuxième pièce en tôle en forme de pot est réalisée sous forme de porte-satellite (10, 35, 43, 50, 53).

5. Composant selon la revendication 2 ou les revendications 2 et 4, **caractérisé en ce que** la plus grosse épaisseur de tôle (S) est disposée sur la pièce en tôle en forme de pot, ou sur le porte-satellite (10, 13, 15).

6. Composant selon la revendication 3 ou les revendications 3 et 4, **caractérisé en ce que** la plus grosse épaisseur de tôle (S) est disposée sur la pièce en tôle en forme de plaque, ou sur la plaque de guidage (36, 41, 46, 51).

7. Composant selon la revendication 6, **caractérisé en ce que** la plaque de guidage (36, 41, 46, 51) présente des orifices (37, 42, 47, 52) répartis sur la périphérie, dans lesquels s'engagent des bras du porte-satellite ou des pattes du porte-satellite (35a, 43, 50, 53) et **en ce que** la plus grosse épaisseur de tôle (S) est formée dans la région des orifices (37, 42, 47, 52).

8. Composant selon la revendication 7, **caractérisé en ce que** l'au moins un joint de soudure axial (39, 40, 45, 49, 55) est disposé dans la région des orifices (37, 42, 47).

9. Procédé de fabrication d'un composant selon l'une quelconque des revendications 1, 2, 4 ou 5, **caractérisé par** les étapes de procédé suivantes :
- fourniture de la deuxième pièce en tôle en forme de pot ou du porte-satellite (11, 13, 15) avec un apport de matériau dans la direction axiale,
- embrèvement et compression de l'apport de matériau dans la direction axiale (a) et
- formation de la plus grosse épaisseur de tôle (S).

10. Procédé selon la revendication 9, **caractérisé en ce que** l'apport de matériau est partiellement comprimé dans une région extérieure ou dans les deux régions extérieures.

11. Procédé selon la revendication 9 ou 10, **caractérisé en ce qu'**un dépassement de matériau (12c, 14a, 16a) subsistant après la déformation est enlevé.

12. Dispositif pour mettre en oeuvre le procédé selon la revendication 9, 10 ou 11, **caractérisé par** un premier outil (18, 18a, 18b, 23, 26) pouvant être avancé dans la direction axiale (Z), avec un évidement frontal (20, 23b, 26b).

13. Dispositif selon la revendication 12, **caractérisé en ce que** l'évidement (20, 23b, 26b) est limité du côté frontal par au moins une arête de cisaillement (19a, 19b, 23a, 26a).

14. Dispositif selon la revendication 12 ou 13, **caractérisé par** un deuxième outil fixe (17a, 17b, 21, 22, 24, 25), recevant la pièce en tôle en forme de pot ou le porte-satellite (11, 13, 15), lequel outil présente une forme d'extrémité pour la région à comprimer (12, 14, 16) de la pièce en tôle (11, 13, 15).

15. Procédé de fabrication du composant selon la revendication 1, 3, 4, 6, 7 ou 8, **caractérisé par** les étapes de procédé suivantes :
- fourniture de la première pièce en tôle en forme de plaque ou de la plaque de guidage (36, 41, 46) avec une épaisseur de tôle constante (s),
- pré-estampage de la pièce en tôle en forme de plaque et formation par emboutissage de la plus grande épaisseur de tôle (S),
- découpage des orifices (37, 42, 47),
- assemblage des deux pièces en tôle (35, 36, 41, 43, 46, 50, 51, 53) et application du joint de soudure axial (39, 40, 45, 49, 55).
